# EUROPEAN PATENT APPLICATION

(11) **EP 3 200 211 A1**
(43) Date of publication of application: **02.08.2017**
(21) Application number: 16153623.0
(22) Date of filing: 01.02.2016
(51) Int. Cl.: H01G 4/32, H01G 13/02, H01G 4/015

(54) **METALLIZED FILM WOUND CAPACITOR AND METHOD FOR PRODUCING THE SAME**

(71) Applicant: Siemens Aktiengesellschaft, 80333 München (DE)
(72) Inventor: Aarskog, Fredrik Gundersen, 7031 Trondheim (NO)

(57) **Abstract**

The invention relates to a subsea metallized film capacitor (70) comprising a first region (30) in which two dielectric layers (51, 52) are provided which are rolled into a cylindrical multilayer structure, wherein each of the two layers comprises a metallized coating resulting in a first number of metallized layers in the first region. The capacitor further comprises a second region (40) provided outside the first region (30) in which at least one dielectric layer (51, 52) is provided which is rolled into a cylindrical multilayer structure, wherein the at least one dielectric layer does not contain a metalized coating so that a second number of non-metallized layers is provided in the second region, wherein the second number of non-metallized layers is higher than 3 % of the first number of metallized layers.

## Description

### Technical Field

The present invention relates to a subsea metallized film capacitor, to a system configured to produce the metallized film capacitor and to a method for producing the metallized film capacitor.

### Background

In deep sea oil and gas production sides, subsea power grids are installed for providing the required electrical power for electrical actuators like electric motors and electric pumps. For controlling an electric motor, voltage, current and AC frequency may be varied. To this end, a variable speed drive (VSD) may be provided in the power grid. These variable speed drives contain inter alia DC link capacitors.

All components including the capacitor inside the subsea VSD enclosure will be located in a pressure compensated fluid volume, e.g. in a dielectric fluid. This means that all the electrical components will be in contact with the dielectric fluid and will be exposed to the same ambient pressure as the water pressure surrounding the variable speed drive. The current design depth for the subsea variable speed drive is 1000 to 3000m, which gives a surrounding seawater pressure of approximately 100 to 300 bar resulting in a fluid pressure inside the variable speed drive of approximately to 100 to 300 bar. Applications of even higher water depths up to 5000 m are foreseeable.

Since the DC capacitor will be exposed to the ambient pressure at the sea bed, it must be designed to withstand the mechanical stress that is caused by this pressure. The capacitors used are often implemented as film capacitors, e.g. metallized film capacitors. The most promising capacitor technology is self-healing film capacitors, due to less volume, weight and better life time compared to other technologies. It is known that a certain interlayer pressure, i.e. the directional pressure of or force that forces one film layer against the neighboring film layer, is required for the self-healing mechanism to work under high ambient pressure.

This interlayer pressure is currently obtained using springs and stiff plates. The interlayer pressure becomes the force from the spring divided by the surface area of the capacitor.

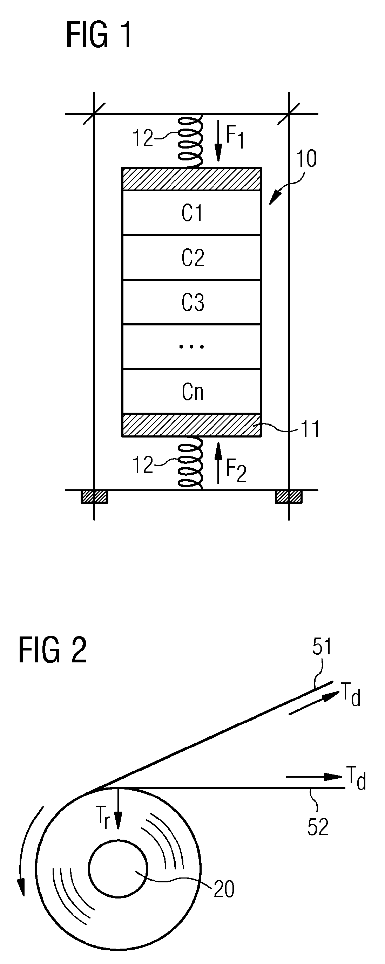

Figure 1 shows an embodiment of a group of capacitors provided in a variable speed drive. The system comprises a stack of capacitors 10 named as capacitors C1-Cn in the example shown. On the upper and on the lower side of the stack stiff plates 11 are provided which are pressed against the capacitor surface by springs 12. The pressure generated by the springs is transmitted via the plates 11 to the capacitors 10. Normally, the interlayer pressure needs to be around 0.5 MPa for the capacitor to function at high fluid pressure up to 400 bar.

Since the capacitor film or dielectric layer shrinks when pressurized up to 400 bar, the spring needs to be long and needs to have a low spring constant. This, however, means that the spring becomes heavy and has a large volume. This embodiment has the drawback that a special type of capacitor element is needed, namely a flat capacitor which is more expensive and the method for generating such a capacitor is difficult. Furthermore, the mechanical assembly is complex and it takes a long time to assemble the capacitors with the spring mechanism. An assembly error of the stack of capacitors can lead to capacitor failure and the spring mechanism is large and heavy due to its steel construction.

Accordingly, a need exists to provide a metallized film capacitor for subsea applications and a method for producing the same which overcomes the above-mentioned drawbacks. It is especially desired to reduce the production costs of such a subsea metallized film capacitor.

### Summary

This need is met by the features of the independent claims. Further aspects are described in the dependent claims.

According to a first aspect, a subsea metallized film capacitor is provided comprising a first region in which two dielectric layers are provided which are rolled into a cylindrical multilayer structure, wherein each of the two layers comprises a metallized coating resulting in a first number of metallized layers in a first region. The subsea metallized film capacitor furthermore comprises a second region provided outside the first region in which at least one dielectric layer is provided which is rolled into a cylindrical multilayer structure wherein the at least one dielectric layer does not comprise a metallized coating resulting in a second number of non-metallized layers in the second region, wherein the second number of non-metallized layers is higher than 3% of the first number of metallized layers.

The newly proposed metallized film capacitor for subsea applications uses the additional layers on the second region where the non-metallized layers do not comprise the metal coating in order to generate the interlayer pressure. The outer part is a non-active part of the capacitor so that it does not contribute to the capacitance. However, the second region in the outer part can replace the spring assembly in stiff plates mentioned in the introductory part of the application so that the weight and the volume of the subsea metallized capacitor is reduced.

The number of non-metallized layers in the second region depends on the desired interlayer pressure. By way of example the second number of non-metallized layers can be higher than 5% of the first number, or it can be higher than 7% of the first number. In another embodiment the second number of non-metallized layers is higher than 10% of the first number of metallized layers, or higher than 15% or 20% of the first number of metallized layers. Thus, if the capacitor comprises 1000 layers in the first region, i.e. metallized layers, it can comprise between 30-200 non-metallized layers above the metallized layers, e.g. between 30 and 50 layers, between 50 or 80 layers, 100 layers, 150 or 200 layers.

The subsea metallized film capacitor can be a cylindrical capacitor so that it has an outer housing with a cylindrical shape surrounding the first and the second region. In the prior art often a flattening of the capacitor was carried out, however, in the present application the cylindrical shape which is generated when the two dielectric layers are rolled into a cylindrical multilayer structure may be maintained so that a further production step present in the capacitor manufacturing step can be omitted. In the second region the non-metallized layers are in direct contact with one another. This means that here the two dielectric layers are directly sandwiched one above the other.

Furthermore, a system configured to produce a metallized film capacitor is provided, the system comprising a layer module configured to roll two dielectric layers into a cylindrical multilayer structure. The system furthermore comprises a coating module configured to coat at least a part of the two dielectric layers with a metallized coating before the two dielectric layers are rolled into a cylindrical multilayer structure. Furthermore a control module is provided configured to determine when a first number of metallized layers is present in a first region of the metallized film capacitor and to stop the module when the first number of metallized layers is present in the first region. The control module is further configured to determine a second number of non-metallized layers in a second region outside the first region, wherein the second number of non-metallized layers do not comprise a metallized coating, wherein the second number is higher than 3% of the first number. The layer module is configured to roll the at least one dielectric layer in the second region outside the first layer until the second number of non-metallized layers is present in the second region.

Such a system has the advantage that the capacitor can be produced at lower costs as the winding mechanism is a standard mechanism which can be easily obtained and the system does not require a change in the capacitor winding process. Furthermore, the metallizing deposition can be controlled quiet accurately so the metallization of the two dielectric layers can be stopped at a length corresponding to the first number of layers in the final product. Preferably, the metallization (coating) and the winding are two separate processes.
Metallization of the film may be performed first. The finished film is rolled onto a temporary roll:
- First a length of non-metallized film is rolled onto the roll, when the correct length (+ maybe some margin due dependent on the winding machine) is reached:
- Metallization process is started, until correct length. The same is done for the second film.
One obtain two rolls to put into the layer module of the system which will perform the winding process.

The control module may determine a defined minimum interlayer pressure which should be present between each of the metallized layers in the first region. The control module can then be configured to determine the second number of non-metallized layers in the second region such that the defined minimum interlayer pressure is present between each of the metallized layers in the first region.

By way of example, the interlayer pressure may be determined by sensors included into some test capacitors. After the winding and the annealing processes of the capacitor generation are completed, the interlayer pressure may be measured at several places inside the capacitor and the number of metallized layers versus the non-metallized layers can be determined taking into account the known minimum required interlayer pressure.

Preferably, the winding of the two dielectric layers in the second region comprises the placing of one non-metallized layer in direct contact with an adjacent non-metallized layer. The stack of non-metallized layer will then provide the required interlayer pressure.

Preferably, for generating the two dielectric layers in which none of the layers comprises the metallized coating, the coating of the two dielectric layers with the metallized film can be simply stopped when the first number of metallized film layers is obtained in the first region.

The two dielectric layers may be coated with a metallized coating on a predefined length of the dielectric layers wherein the length is determined based on the first number of metallized layers in the final capacitor in the first region of the capacitor. For the second region different options are present. According to one option the winding of the two dielectric layers beyond the predefined length without the metallized coating is continued until the second number of non-metallized layers is obtained in the second region. In another option the winding of one of the two dielectric layers beyond the predefined length without the metallized coating is continued until the second number of non-metallized layers is obtained in the second region. In this embodiment, one of the layers may be cut off and the double number of turns is used for one of the layers.

In another option the winding outside the first region is continued with a third separate dielectric layer which does not have a metallized coating until the second number of non-metallized layers is obtained in the second region. The second region may not be completely free of a metallized coating. By way of example, the second region may comprise a single layer of metallized coating as a single layer in the second region will not provide an electrical effect and does not contribute to the capacitance.

It is possible that the second number of non-metallized layers in the second region can be determined such that a defined minimum interlayer pressure is present between each of the metallized layers in the first region. Furthermore, the first number of metallized layers may be determined taking into account the desired capacitance the generated metallized film capacitor should have after the production process is finished.

It is to be understood that the features mentioned above and features yet to be explained below can be used not only in the respective combinations indicated, but also in other combinations or in isolation without departing from the scope of the present invention. Features of the above-mentioned aspects and embodiments may be combined with each other and other embodiments unless explicitly mentioned otherwise.

### Brief description of the drawings

The foregoing and additional features and effects of the application will become apparent from the following detailed description when read in conjunction with the accompanying drawings in which like reference numerals refer to like elements.
Figure 1 shows an example of a stack of capacitors used a variable speed drive according to the prior art.
Figure 2 shows a schematic illustration how two dielectric layers are wound in a winding process of a multilayer metallized film capacitor incorporating features of the invention.
Figure 3 shows a schematic representation indicating a relationship between the layer number and the interlayer pressure.
Figure 4 shows an example of a metallized film capacitor incorporating features of the invention and comprising a first region with metallized layers and a second region including non-metallized layers in a sectional view.
Figure 5 shows an example schematic representation of a system configured to produce the metallized film capacitor shown in figure 4.
Figure 6 shows an example of a flowchart of a method carried out by the system of figure 5 when the metallized film capacitor of figure 4 is generated.
Figure 7 shows an example of a flowchart carried out by the system of figure 5 for generating a film capacitor such as shown in figure 4 according to a further embodiment.

### Detailed Description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations and elements illustrated in the drawings are not necessarily shown as scale. Rather the various elements are represented such that their function and general purpose becomes apparent to a person skilled in the art. Any connection or coupling between functional blocks, devices, components or physical or functional units shown in the drawings and described hereinafter may also be implemented by indirect connection or coupling. Coupling between components may be established over a wired or wireless connection. Functional blocks may be implemented in hardware, software, firmware or a combination thereof.

In the following embodiments will be disclosed which include a subsea metallized film capacitor which is designed such that the interlayer pressure is high enough at all layers of the capacitor where a metallized coating is present.

Figure 2 shows a part of the production process of such a capacitor. As it is also known from standard winding processes 2 metallized films 51 and 52 are wound onto a core 20 which normally has a cylindrical or pipe or tube shape. In the winding process tension is supplied to each of the two layers to make the layers flat and to avoid the wrinkling of the layers while the core rotates. The interlayer pressure at this capacitor type is dependent on the tension during the winding and on the number of turns i.e. the number of layers as described by Peng, Bo et al. in "Calculation and measurement of metallized film capacitor's inner pressure and its influence on self-healing characteristics". Dielectrics and Electrical Insulation, IEEE Transactions on October 2010, volume 17, 5, pages 1612-1618. The pressure mainly depends on the number of layers. As will be explained below the rolling process of figure 2 will start with rolling of metallized layers and will continue with non-metallized layers.

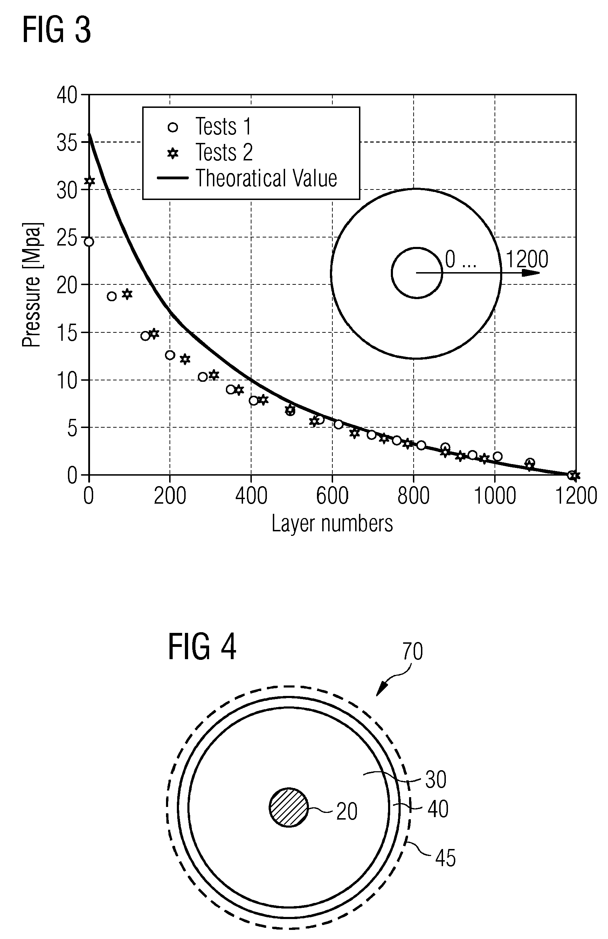

As shown in figure 3 which is deduced from the above reference, the interlayer pressure is reduced the further outside the layer is located. In the present invention, the winding of the capacitor as known from the prior art is amended in such a way that in addition to the metallized layers provided in each film capacitor, the capacitor additionally comprises a further region provided on the outside of the normal capacitor windings in which the winding process is continued, however the layers are not metallized any more so that non-metallized layers are added to the outside in a second region of the capacitor.

This is shown in further detail in figure 4. Figure 4 shows the final result of the winding shown in figure 2 wherein in a first region 30 the two dielectric layers are provided which are rolled onto the core 20 and in which each of the two layers comprises a metallized coating resulting in a number of metallized layers, a first number of metallized layers in the first region 30. The number of metallized layers is determined as usual and mainly depends on the capacitance that is needed for the capacitor. In addition to the first region 30 a second region 40 is provided in which the winding of the two layers as shown in figure 2 is continued. However the coating with the metallized film was stopped at the end of the first region 30 so that in the second region 40 the two dielectric layers are directly in contact with each other and lie above and each dielectric layer lies directly on a neighboring dielectric layer. By adding more layers to the outside of capacitor 70 the interlayer pressure is increased as, the more layers are added the higher the interlayer pressure is. The two regions are surrounded by a cylindrical outer housing 45.

In order to determine how many additional layers at the second region 40 are needed, test measurements with test capacitors may be carried out which comprise pressure sensors inside. By way of example the following type of sensors might be used: resistance strain gauge sensors or piezo resistive sensors. These sensors are flat sensors which can be included into a capacitor for test purposes. After the winding and annealing processes are completed, the interlayer pressure can be measured several places inside the capacitor and the number of metallized layers versus non-metallized layers can be determined based on the known minimum required interlayer pressure. By way of example, if the minimum required interlayer pressure is 0.5 MPa, the last 50-200 layers may be non-metallized layers if 1000 metallized layers are provided. In more general terms it may be enough to add second number of non-metallized layers wherein this number is higher than 3% of the number of metallized layers. The second number of non-metallized layers may be higher than 5% compared to the existing metallized layers, or higher than 7%, higher than 10%, higher than 12%, higher than 15% or higher than 20%.

When the interlayer pressure has been determined, the determined number of non-metallized layers versus the number of metallized layers can be used in the process of generating the film capacitor. For each layer such as layers 51 and 52 shown in figure 2 a length corresponding to the first region is metallized. Then the metallizing process is stopped for the remaining length corresponding to the outer non-metallized layers. As mentioned in figure 2 the interlayer pressure also depends on the tension during the winding. However, as also the outer layers need enough interlayer pressure, the tension applied during the winding is not amended compared to winding processes known in the art. The tension may be accurately controlled during winding, and may be changed during the winding process (it could for example be dependent on layer number, i.e. increases a little for each layer wound).

The above described process will result in a capacitor 70 as shown in figure 4 and as described above. The inner part or first region 30 will be responsible for the capacitance. The second region or outer part 40 would be meaningless in a capacitor for topside use, but in a subsea application this outer part can replace the solid mechanical structure such as the steel springs and the stiff plates of the capacitor assembly known in the art and as shown in figure 1.

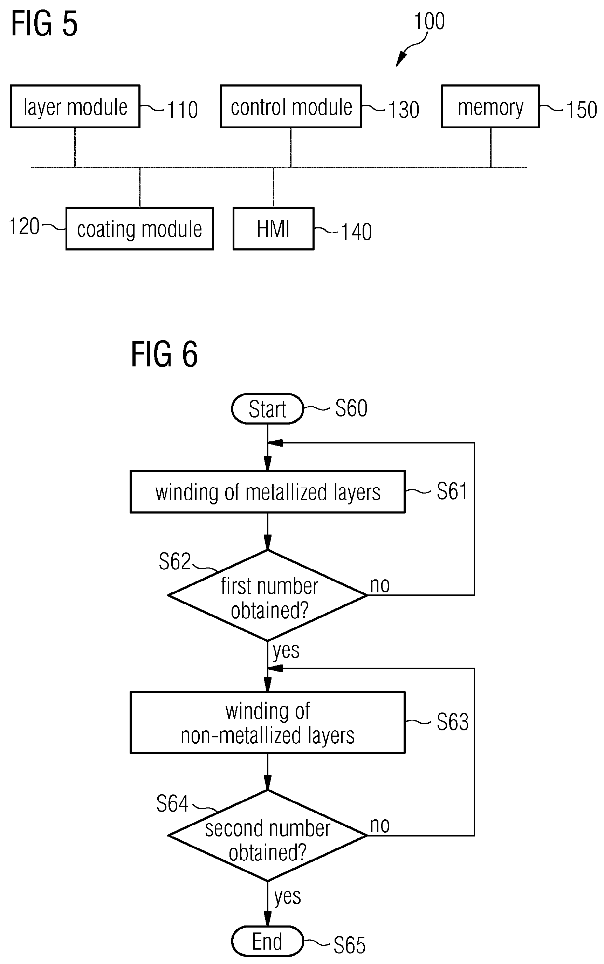

Figure 5 schematically shows a system which can be used to produce metallized film capacitor as shown in figure 4.

Figure 5 shows schematically a system which can be used to generate the capacitor of figure 4. The system 100 comprises a layer module 110 with which the two dielectric layers can be rolled onto the core in order to provide the multilayer structure as shown in part in figure 2. Furthermore, a coating module 120 is provided which is able to coat at least part of the two dielectric layers with the metallized coating before the two dielectric layers are rolled into the cylindrical multilayer structure. A control module 130 is provided which controls the functioning of the whole system and thus controls the layer module 110 and the coating module 120. The control module 130 is furthermore configured to determine the number of layers in the first region and the number of layers in the second region. The number of layers in the first region, the metallized film layers depend on the needed capacitance. This can be input by a user via a human machine interface 140 or may be provided in the system as a preconfigured table in memory 150. The control module is further configured to determine the second number of non-metallized layers which may be also input by a user via the human machine interface 140 or may be preconfigured in a table stored in memory 150.

The control module 130 then controls the system in such a way that the coating module coats the two dielectric layers with the metallized film in such a way that the desired first number of dielectric metallized film layers is obtained in the first region 30 shown in figure 4. The control module then stops the coating module 120 and the layer module 110 continues to wind the two layers, however without the metallized coating between the layers. The layer module 110 continues the winding until the desired second number of non-metallized film layers is provided.

Figure 6 summarizes a method carried out by the system 100 of figure 5. The method starts in step S60. In step S61 the number of windings of the metallized layers in the first region is carried out. In step S62 it is checked whether the desired first number of metallized film layers is present in the first region 30. The system continues until the desired number of metallized film layers is obtained in step S62. The system then continues in step S63 with the winding of the non-metallized layers in order to achieve the desired number of non-metallized layers in the second region 40. This may be achieved by checking in step S64 whether the second number of non-metallized layers as desired is obtained. If this is not the case the windings continued in step S63 and if the second number of layers is obtained the method ends in step S65.

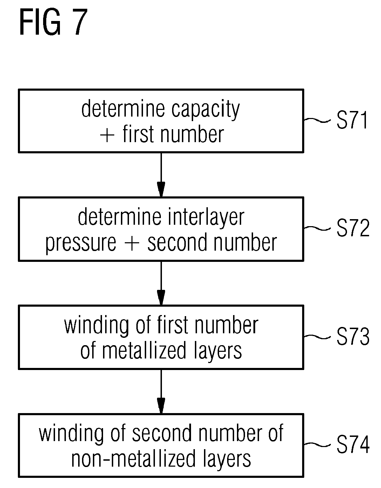

Figure 7 shows further details of the method of figure 6. For determining the number of metallized layers in the first region the system 100 of figure 5 may determine the capacity needed for the capacitor to be produced (S71). When the capacity is known the first number of layers, the number of metallized layers can be determined. Furthermore, the interlayer pressure is determined in step S72 that is needed in each of the first layers. Based on this knowledge and eventually based on test measurements or other data the second number of non-metallized layers in the second region can be determined. In step S73 the winding of the first number of metallized layers is started and carried out until the first number of metallized layers is obtained. The winding of the second number of non-metallized layers can be started in step S74 until the desired number of non-metallized layers is present in the second region.

The above described invention provides a subsea metallized film capacitor which is easy to produce, has lower production costs compared to other subsea capacitors. The round windings as described above is a standard production method and can be easily made. A further advantage can be seen on the fact that no change in the capacitor winding process is needed. Furthermore the mechanical assembly of springs can be avoided which were used in the prior art to generate the required interlayer pressure. Additionally the risk of assembly errors during the assembly of the capacitor stack is minimized. This in total leads to lower cost and a lower weight due to the non-required spring assembly.

## Claims

1. A Subsea metallized film capacitor (70) comprising
- a first region (30) in which two dielectric layers (51, 52) are provided which are rolled into a cylindrical multilayer structure, wherein each of the two layers comprises a metallized coating resulting in a first number of metallized layers in the first region,
- a second region (40) provided outside the first region (30) in which at least one dielectric layer (51, 52) is provided which is rolled into a cylindrical multilayer structure, wherein the at least one dielectric layer does not contain a metalized coating so that a second number of non-metallized layers is provided in the second region, wherein the second number of non-metallized layers is higher than 3 % of the first number of metallized layers.

2. The subsea metallized film capacitor (70) according to claim 1, wherein the second number of non-metallized layers is higher than 5% of the first number, preferably higher than 7 % of the first number and more preferably higher than 10% of the first number of metallized layers.

3. The subsea metallized film capacitor (70) according to claim 1 or 2, further comprising an outer housing (45) with a cylindrical shape surrounding the first region and the second region.

4. The subsea metallized film capacitor (70) according to any of the preceding claims, wherein in the second region (40) the two adjacent non-metallized layers are in direct contact with one another.

5. A system (100) configured to produce a metallized film capacitor, comprising:
- a layer module (110) configured to roll two dielectric layers into a cylindrical multilayer structure,
- a coating module (120) configured to coat at least a part of the two dielectric layers with a metallized coating before the two dielectric layers are rolled into the cylindrical multilayer structure,
- a control module (130) configured:
- to determine when a first number of metallized layers is present in a first region (30) of the metallized film capacitor, and to stop the layer module when the first number of metallized layers is present in the first region (30),
- to determine a second number of non-metallized layers in a second region (40) outside the first region whereas the second number of non-metallized layers do not comprise a metallized coating, with the second number being higher than 3 % of the first number,
wherein the layer module is configured to roll at least one dielectric layer in the second region outside the first region until the second number of non-metallized layers is present in the second region (40).

6. The system (100) according to claim 5, wherein the control module (130) is configured to determine a defined minimum interlayer pressure which should be present between each of the metallized layers in the first region, the control module being configured to determine the second number of non-metallized layers in the second region such that the defined minimum interlayer pressure is present between each of the metallized layers in the first region.

7. A method for producing a metallized film capacitor (70), comprising the steps of:
- winding two dielectric layers (51, 52) into a cylindrical multilayer structure, wherein each of the two layers is coated with a metallized coating, wherein the winding is carried out until a first number of metallized layers is provided in a first region (30),
- providing at least one dielectric layer which does not comprise a metalized coating,
- winding the at least one dielectric layer into a cylindrical multilayered structure in a second region (40) of the capacitor outside the first region until a second number of non-metallized layers is provided in the second region, wherein the winding is carried out until the second number of non-metallized layers is higher than 3% of the first number of metallized layers.

8. The method according to claim 7, wherein the winding in the second region (40) is carried out until the second number of non-metallized layers is higher than 5% of the first number, preferably higher than 7 % of the first number and more preferably higher than 10% of the first number of metallized layers.

9. The method according to claim 7 or 8, wherein the winding of the at least one dielectric layer in the second region (40) comprises placing one non metallized layer in direct contact with an adjacent non metallized layer.

10. The method according to any of claims 7 to 9, wherein the two dielectric layers are coated with a metallized coating on a predefined length of the dielectric layers which is determined based on the first number of metallized layers in the first region, wherein the winding of the two dielectric layers beyond the predefined length without the metallized coating is continued until the second number of non-metallized layers is obtained in the second region.

11. The method according to any of claims 7 to 9, wherein the two dielectric layers are coated with a metallized coating on a predefined length of the dielectric layers which is determined based on the first number of metallized layers in the first region, wherein the winding of one of the two dielectric layers beyond the predefined length without the metallized coating is continued until the second number of non-metallized layers is obtained in the second region.

12. The method according to any of claims 7 to 9, wherein the two dielectric layers are coated with a metallized coating on a predefined length of the dielectric layers which is determined based on the first number of metallized layers in the first region, wherein the winding is continued with a third dielectric layer without a metallized coating until the second number of non-metallized layers is obtained in the second region.

13. The method according to any of claims 7 to 12, wherein the second region comprises a single layer with a metallized coating.

14. The method according to any of claims 7 to 13, further comprising the step of determining the second number of non-metallized layers in the second region (40) wherein the second number is determined such that a defined minimum interlayer pressure is present between each of the metallized layers in the first region (30).

15. The method according to any of claims 7 to 14, further comprising the step of determining the first number of metallized layers in the first region based on a defined capacitance of the generated metallized film capacitor.
